# EUROPEAN PATENT APPLICATION

(11) **EP 1 045 559 A1**
(43) Date of publication of application: **18.10.2000**
(21) Application number: 99302881.0
(22) Date of filing: 13.04.1999
(51) Int. Cl.: H04L 12/56

(54) **Medium access control (MAC) method in a cellular packet system**

(71) Applicant: LUCENT TECHNOLOGIES INC., Murray Hill, New Jersey 07974-0636 (US)
(72) Inventor: Brooks, Fiona Clare, Millbrook Place, Bath BA2 4JY (GB); Demetrescu, Cristian, London SW19 2EU (GB); Foster, Gerard Terence, Swindon, Wiltshire SN2 3GF (GB); Giustina, Andrea, Swindon, Wiltshire SN5 8JU (GB); Samuel, Louis Gwyn, Swindon, Wiltshire SN2 3YG (GB); Ilas, Constantin, Swindon, Wiltshire SN5 9RP (GB)
(74) Representative: Williams, David John

(57) **Abstract**

There is disclosed a packet radio network providing communications in channels allocated on up and down links between a base station and user terminals. In periods following a time when the user terminal has no user data to transmit on the up link, the base station reuses the up link channel for data communication with another user terminal and polls the user terminal repeatedly to determine whether it has user data to transmit.

This invention introduces a new access procedure suitable for real-time services, and can be applied to any packet radio network.

## Description

This invention relates to packet radio networks.

Packet-switched radio networks can potentially increase system capacity as compared with the circuit-switched networks due to the inherent statistical multiplexing gain. This is because a user is not occupying the radio channel all the time during a session and when the radio channel is idle it can be used by other active users. However in order to take full advantage of the statistical multiplexing gain fast access to the radio resources is required specially for real-time services like voice and life video transmission.

One of the most common radio access procedures is based on the protocol reservation media access (PRMA) where any active user (i.e. user which has data to transmit) sends a random access number on a common radio channel as in the ALOHA system. The PRMA system was addressed in several papers for example: "Performance of a statistically multiplexed access mechanism for a TDMA radio interface", J. Dunlop et al., IEEE Personal Communications, 1995, pp.56-64; "The performance of the GSM random access procedure", C. Luders and R. Haferbeck, Proceedings of IEEE VTC, Vol. 2, 1994, pp. 1165-1169. The PRMA protocol is used for the access procedure in the general packet radio service (GPRS) for GSM phase 2+ (for reference on GPRS see "Digital cellular telecommunications system (Phase 2+), General Packet Radio System (GPRS), Mobile Station-Base Station System interface, Radio Link Control/Medium Access Control (RLC/MAC) protocol, GSM 04.60, version 2.0.0"). However, although PRMA is suitable for bursty users (like e-mail and telemetry) where the packet delay constraint is much larger than the network reply time, for real-time services (like voice and video) which are delay sensitive, the packet delay is critical.

In the PRMA access scheme a voice user requests a channel every time it switches between silence and speech periods. During the silence period the radio channel is released by the voice user and returned to the common pool of channels. As the voice user becomes active (i.e. generating speech) a random access (RA) burst is sent on the random access channel (RACH), which is a common control channel shared by all users in a cell, as in the slotted ALOHA protocol. This process leads to a packet multiplexing statistical gain i.e. there can be more users than radio channels. In order to benefit from the statistical gain inherent in any packet network the access delay (i.e. the time elapsed from the moment when the RA was first sent on the RACH to the moment when the a traffic channel is allocated to the user) should be very small compared with the tolerable service delay (e.g. for voice service the one way delay is less than 100ms). However for some packet networks based on the PRMA (e.g. GPRS) the access delay is, in the best case (i.e. no contention on the RACH channel among different RA attempts), higher than the maximum acceptable delay for a voice service. Thus a new procedure is required in these cases.

Against this background, in accordance with the invention, there is provided a packet radio network providing communications in channels allocated on up and down links between a base station and user terminals, the base station being arranged so that in periods following a time when the user terminal has no user data to transmit on the up link, the base station reuses the up link channel for data communication with another user terminal and polls the user terminal repeatedly to determine whether it has user data to transmit,

This invention introduces a new access procedure suitable for real-time services. The new access scheme, can be applied to any packet radio network. In an example, a dynamic centralised polling algorithm is under the network control. In the polling access scheme the active users (i.e. those attached to the network and ready for transmission) have a dedicated radio channel during their transmission. Once there is a pause in the transmission of user data on the UL (e.g. a voice user is in the silence period) the network polls the user periodically to see if it has something to transmit. While paused the user is still logically camped on the uplink (UL) channel and therefore it is listening to the corresponding downlink (DL) channel to receive the polling messages from the network. It is worth noting that any active user is always camping (logically or physically) on a radio channel so no new RA attempt on the RACH channel is required.

In order to optimally use the scarce radio capacity in the polling access scheme more than one user is logically camped on the same radio channel. For example if one voice user is multiplexed with a best effort data user on the same radio channel then during the voice silence periods the best effort user can transmit some of its data, see "Next generation multiservice VSAT networks" by M H Hadjitheodosiou, et al, Electronics and Communications Eng. Journal 1997 pp117-126. The polling period is dynamically controlled by the network to support the quality of service (QoS) of all users in the coverage area.

In order to attach to the network, any user should first use the PRMA scheme to access the network. Once attached the user transmits its QoS profile to the network which will decide the access scheme to be used later during the required service (e.g. voice call). Thus the access procedure is chosen according to the service QoS. To exemplify how the new polling access scheme works we illustrate its implementation for GPRS. However this does not restrict in any way the applicability of this access scheme to any packet radio network.

To poll the user terminal, the base station preferably indicates on the down link a dedicated data block on the up link, and the user terminal indicates in the dedicated data block whether it has user data to transmit.

Preferably, the up link channel allocation is dynamic.

Transmission of each user data block on the up link is preferably individually enabled by an up link state flag transmitted on the down link.

The base station is preferably responsive to receipt of empty blocks of user data to infer that the user terminal has no data to transmit.

The up link channel allocation is preferably dedicated when the user station has data to transmit.

The network procedures for the embodiment will first be described broadly.

### Set-up phase.

For incoming calls, the network pages the MS and the MS sets up the connection using the PRMA access. For outgoing calls, the MS sets up the connection using the PRMA access.

### First transmission phase.

In general, network reserves resources in the UL to the MS either dynamically or with a dedicated allocation. The MS uses dedicated resources in the UL to transmit voice in data blocks. More than one user can be multiplexed on the same physical resources. When the MS has nothing more to send, it goes to the subsequent silence phase.

As soon as the MS has no more voice to send, it starts sending empty blocks just to keep the synchronization or data blocks with a specific "silence" coding. At the first dummy block or data block with a specific "silence" coding, the network considers the MS to be in the silence phase. Alternatively the MS could send an explicit message to tell the network it is entering a silence phase and then ceases transmission

### Silence phase.

The mobile is moved to the pool group of mobiles so the network is now able to reuse the resources formerly dedicated to the MS to serve other connections. In the meantime the network starts polling the MS reserving periodically a data block in the UL for the MS. The MS checks the DL to see when there is an UL data block dedicated for it. As long as the MS has nothing to send, it replies to the polling sending dummy blocks or data blocks with a specific "silence" coding. Alternatively, if the MS has signaling to send, it can use the dedicated block to send a signaling block. During this phase the network can decide to move the MS to another channel: in this case the MS camps on the new channel and the network and the MS will continue the polling procedure on the new channel.

When the MS has again voice to send, it waits for the next polling and uses the dedicated block to send voice on data block in the UL. When the network receives voice in a data block, it considers the MS to be in transmission phase and starts reserving UL resources for the MS in a dedicated way. If necessary, the network can send an explicit message to the MS giving the new allocation.

### Subsequent transmission phase.

The network reserves some resources in the UL to the MS with a dedicated scheme allocation. The MS uses the dedicated resources in UL to transmit voice in data blocks. The following operations are the same as in the first transmission phase. A connection could last for more transmission and silence phases until the MS or the network decide to release the connection.

### Release phase.

The MS can release the connection either in a silence or in a transmission phase using one of the dedicated UL blocks to signal the release. The network can release the connection either in a silence or in a transmission phase signaling the release in a DL block on the channel on which the MS camps.

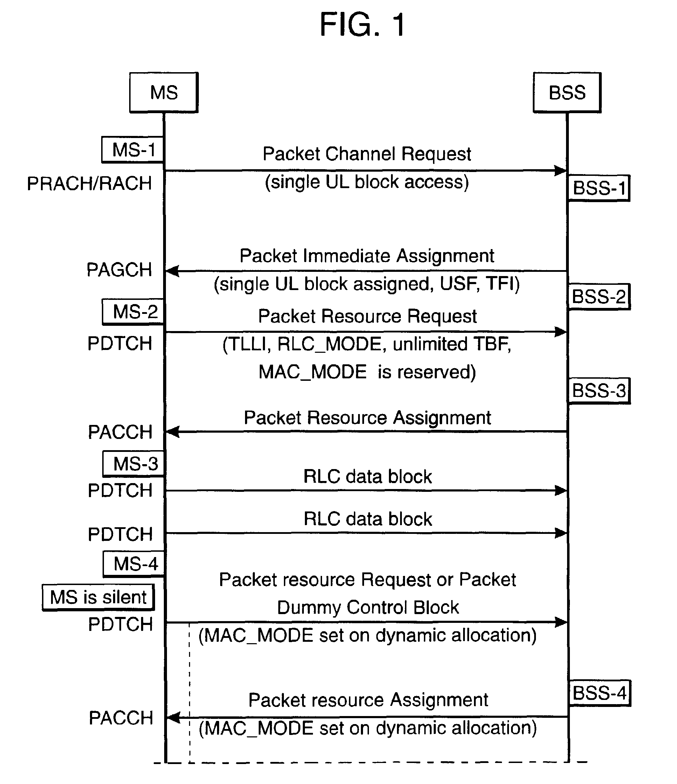

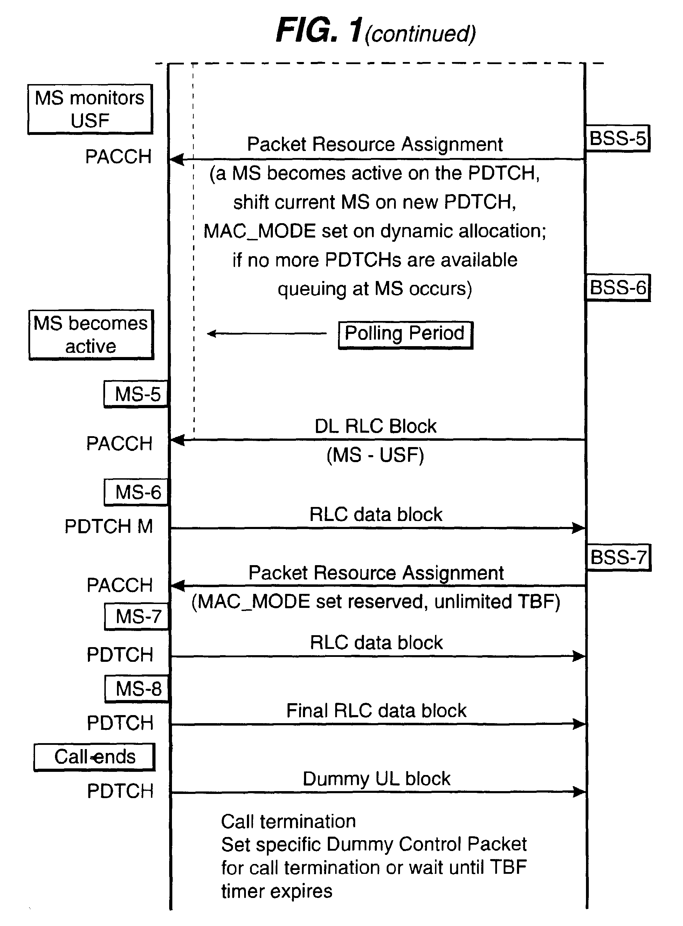

In Figure 1 the signaling diagram of the polling access scheme is presented. The channel definitions and the message notations are used as in GPRS system but their meanings are generic enough to be used in any packet network.

In Figure 1 we denote by MS-*n* and BSS-*n* the nth message sent by the mobile station (MS) and the base station subsystem (BSS) respectively. The messages MS-*n* and BSS-*n* are detailed below as follows.

### (MS-1)

The mobile station (MS) accesses the network by sending a RA number on the RACH channel. This corresponds to the set up phase in the general algorithm presented above. The MS asks for one UL radio link control (RLC) block on a dedicated radio channel. The RLC will be used for contention resolution.

### (BSS-1)

The base station subsystem (BSS) processes the RA request from the MS and sends back to the MS a packet immediate assignment message on a packet associated grant channel (PAGCH) containing a radio channel allocation (a time slot (TS) in GPRS), an UL temporary flow identifier (TFI) and an uplink state flag (USF) used to dynamically control the UL transmissions.

### (MS-2)

The MS camps on the allocated radio channel (called packet data traffic channel PDTCH) and sends one RLC block with its unique identity (i.e. TIMSI/IMSI/TLLI), the required transmission features and quality of service profile. If the MS asks for real-time services (e.g. voice) then the RLC-MODE is unacknowledged and the medium access control (MAC)-MODE is dedicated. The dedicated MAC-MODE indicates that a radio channel is dedicated only to this MS. The MAC-MODE set on dedicated assures that the MS has a dedicated radio channel for as long as it has data to transmit (i.e. the temporary block flow (TBF) is unlimited).

### (BSS-2)

The BSS sends to the MS a packet resource assignment to inform it about the radio resources allocated to it for this data transmission. The BSS sends this message on the packet associated control channel (PACCH) which is the dual of the PDTCH used on the UL by the MS.

### (MS-3)

The MS sends RLC blocks on the UL until it does not have any new block to transmit i.e. the MS becomes silent (this corresponds to first transmission phase in the general algorithm presented above).

### (MS-4)

Once the MS is silent (i.e. no more data packets to send) a control packet is sent in the UL on the PDTCH to inform the network that the MS there is a pause in transmission, and therefore the radio channel can be reused (as in the silence phase of the general algorithm presented above). For the voice users this pause is of the order of seconds and a voice activity detector (VAD) triggers the switch between the active and silent periods. The MS is still logically camped on the PDTCH for the UL and listens on the associated PACCH on the DL. In order to save UL radio resources during the silence period the polled MS can send data (in case the MS has another TBF opened for data transmission) or UL signalling/system information (e.g. acknowledgements for DL data transmission, measurement reports) in addition to the reply to the polling message. While no reply to polling messages is sent in the UL the radio channel can be used by an active data user or another real time services user also in polling mode, thus improving the UL radio utilisation.

### (BSS-4)

Once the network has been informed that the MS is silent it sends a Packet Resource Assignment to the MS on the PACCH to set its MAC-MODE to dynamic allocation (i.e. the MS listens to the DL associated channel PACCH for its USF; once the MS finds its USF broadcast on the PACCH then it sends one RLC block on the PDTCH on the UL and start listening again on the PACCH on the DL for its USF). The MS will be polled by the BSS later on the PACCH. The polling from BSS is simply done by sending the MS-USF on the PACCH. During the polling period the radio channel initially dedicated to the MS can be used to serve other active MS either data or real-time ones. The polling period is set according to the service delay constraint (e.g. for voice up to 80 ms delay is acceptable).

### (BSS-5)

In order to make use of the spare capacity during the polling period more than one MS is multiplexed on the same radio channel. Each transmission flow from a MS is uniquely identified by its TFI. Moreover, in order to support dynamic UL resource allocation, the USF is used to multiplexed MSs on the same UL radio channel. To optimise both DL and UL radio resources at least two real-time MS are multiplexed with more than one best effort data MS on the same radio channel. Thus during the polling period one DL RLC bloc can carry data for a data MS (identified by its DL TFI) and the USF for a real-time user waiting to send an RLC block in the UL. If two or more real-time users are multiplexed on the same radio channel, then more UL capacity can be gained due to the statistical multiplexing effect.

If during the polling period of a MS another real-time MS sharing the same radio channel becomes active (i.e. with speech frames ready to send) then a channel reassignment procedure is adopted as follows in order to avoid contention (as described in the subsequent transmission phase in the general algorithm). If there are free or radio channels lighter loaded than the current one, then the active MS is instructed to camp unlimited (MAC-MODE is dedicated) on the free or lighter loaded radio channel. At the same time all the MSs already camping on the lighter loaded radio channel are instructed to move to a new not dedicated radio channel.

If the current radio channel has a low load then the active MS will remain on this channel and its MAC-MODE set to dedicated. All the other MSs camping on the current radio channel are moved to a different not dedicated radio channel. The pool of radio channels in the system is divided into four: dedicated channels (i.e. those used by active real-time MSs), polling channels (those used during the polling period on the DL and its associated UL pair), idle channels and data channels. Either an idle or a polling channel can become a dedicated channel.

Blocking can occur due to the lack of radio channels when the demand for dedicated channels exceeds the total number of available radio channels in the system. When blocking occurs (i.e. all available radio channels are operated in dedicated mode by real-time users and still there are real-time users in the polling mode but there is no radio channel to poll them) then the BSS will try to activate more channels in the congested cell (e.g. by means of dynamic channel allocation) and/or switch some "good" MSs (i.e. MSs with low queuing delay) to a lower rate over the radio interface (i.e. use the adaptive multiple rate according to the environment). If this is not possible the BSS will pause a dedicated ongoing transmission for a tolerable period and give the radio channel to a real-time MS waiting for its poll during this period. Once the poll is done the radio channel is returned to the original MS and its transmission resumed. If the polled MS indicates that it has become active (i.e. it has data to send) and still there is no free radio channel in the system then the BSS will monitor the access delay suffered by this MS. If within a delay threshold a radio channel becomes free then the delayed MS will camp on this radio channel. A way of reducing the probability of call dropping due to lack of available radio channel for real-time MS is to pause every dedicated transmission in the system for a tolerable delay and give the freed radio channel during this period to the delayed MS. Also ongoing calls should have priority over new calls. Alternatively the MS can drop the queued speech frames until it receives a radio resource allocation from the BSC. However if a radio channel is still not available even after waiting the maximum allowed time then the call is dropped due to poor QoS (i.e. large access delay).

### (MS-5)

The MS becomes active (i.e. it has data to transmit) and listens for its USF on the PACCH.

### (MS-6)

Once the active MS is polled by the BSS it shall send an RLC data block on the UL on the dedicated PDTCH and then starts listening to the PACCH for its USF.

### (BSS-7)

The BSS detects that the MS has become active (a valid RLC data block has been received on UL) and sends a Packet Resource Assignment on the DL to inform the MS that its MAC-MODE is now dedicated.

### (MS-7)

The MS uses the allocated dedicated radio resources until it does not have any more data to send in the UL.

### (MS-8)

When the call ends the MS sends the final RLC data block and then a call termination message to BSS (as in release phase of the general algorithm presented above).

### Uplink Radio Scheduler

The polling algorithm described above is based on an UL radio scheduler for the real-time MSs during the silence period. All the silent MSs sharing the same radio channel are polled periodically based on a round robin scheme. This will ensure that each real-time MS experiences the same deterministic access delay due to the polling algorithm. The polling algorithm for the UL scheduling transmission of the real-time MSs works together with the data DL scheduler. Thus, if possible, each polling message (i.e. the USF) is sent in the DL together with data for a MS which has an active data TBF. In this way the DL radio resources are not affected by the additional signaling introduced by the polling algorithm (see BSS-4 and BSS-5 ).

When a MS becomes active then the polling algorithm will allocate a dedicated radio channel (if available) to this MS and move all the other MSs sharing this radio channel to a different one. In this way contention can be avoided (see BSS-5 message).

In the UL direction the radio channel can be used by a data user during the silence period when no real-time MS is polled. Even when a real-time MS sends a reply to a polling message some system information can be sent together with this reply (see MS-4 step). In this way also the UL radio resources are little affected by the additional UL polling signaling.

The UL polling radio scheduler algorithm is not sensitive to the round trip delay between MS and BSS. This is because all the MSs experienced the same round trip delay and therefore the polling can be done at BSS independent on the round trip delay. Also the UL radio scheduler from this invention is robust against errors on the radio channels due to the round robin scheduling used to poll the silent MSs. If a MS is in a bad radio environment and its polling message is not decoded properly then only this MS will experience an additional delay all the other MSs sharing the same radio channel will not been affected. A MS is polled using the USF flag sent on any RLC block in the DL. The USF flag is very well protected against errors on the radio channel which reduces the probability of algorithm failure. Each polling message sent to a MS is guarded by a timer such as in case of failure the polling message will be repeated when the timer expires.

### Applicability

This invention can be employed independently of the speech codec employed (enhance full rate (EFR), full rate (FR), half rate (HR)etc) or the speech codec adaptation scheme, such as the ETSI defined Adaptive Multi-Rate scheme. The scheme is equally applicable across TDMA based system single timeslot per user radio interfaces and interface standards that allow concatenation of timeslots per users or multiplexing of multiple user per timeslot. The scheme may also be employed in a code based radio interface system where a user either owns unique code, shares a code or uses multiple codes for access as in code division multiple access (CDMA) used in UMTS system.

## Claims

1. A packet radio network providing communications in channels allocated on up and down links between a base station and user terminals, the base station being arranged so that in periods following a time when the user terminal has no user data to transmit on the up link, the base station reuses the up link channel for data communication with another user terminal and polls the user terminal repeatedly to determine whether it has user data to transmit,

2. A packet radio network as claimed in claim 1, wherein to poll the user terminal, the base station indicates on the down link a dedicated data block on the up link, and wherein the user terminal indicates in the dedicated data block whether it has user data to transmit.

3. A packet radio network as claimed in claim 2, wherein the up link channel allocation is dynamic.

4. A packet radio network as claimed in claim 3, wherein the transmission of each user data block on the up link is individually enabled by an up link state flag transmitted on the down link.

5. A packet radio network as claimed in any preceding claim, wherein the base station is responsive to receipt of empty blocks of user data to infer that the user terminal has no data to transmit.

6. A packet radio network as claimed in claim any preceding claim, wherein the up link channel allocation is dedicated when the user terminal has data to transmit.
